# FASCICULE DE BREVET EUROPEEN

(11) **EP 1 291 672 B1**
(45) Date de publication et mention de la délivrance du brevet: **29.12.2010**
(21) Numéro de dépôt: 02292172.0
(22) Date de dépôt: 03.09.2002
(51) Int. Cl.: G01S 13/78

(54) **Procédé et dispositif permettant de générer plusieurs canaux dans un système de type IFF**
Erzeugung mehrerer Kanäle in einem IFF-Typsystem gestattendes Verfahren und Vorrichtung
Method and apparatus enabling to generate several channels within a type IFF system

(30) Priorité: 07.09.2001 FR 0111618
(43) Date de publication de la demande: 12.03.2003
(73) Titulaire: Thales, 75008 Paris (FR)
(72) Inventeur: Martin, Jean-Claude, c/o Thales Intellectual Prop., 94117 Arcueil Cédex (FR)
(74) Mandataire: Dudouit, Isabelle

(56) Documents cités:
- FR-A- 2 632 421
- US-A- 5 001 751
- US-A- 5 426 434

## Description

La présente invention concerne un procédé et un dispositif permettant de générer ou de créer des canaux ou modes d'interrogation dans un système de type IFF (Identification Friend or Foe en anglo saxon) utilisant des formes d'onde à étalement de spectre.

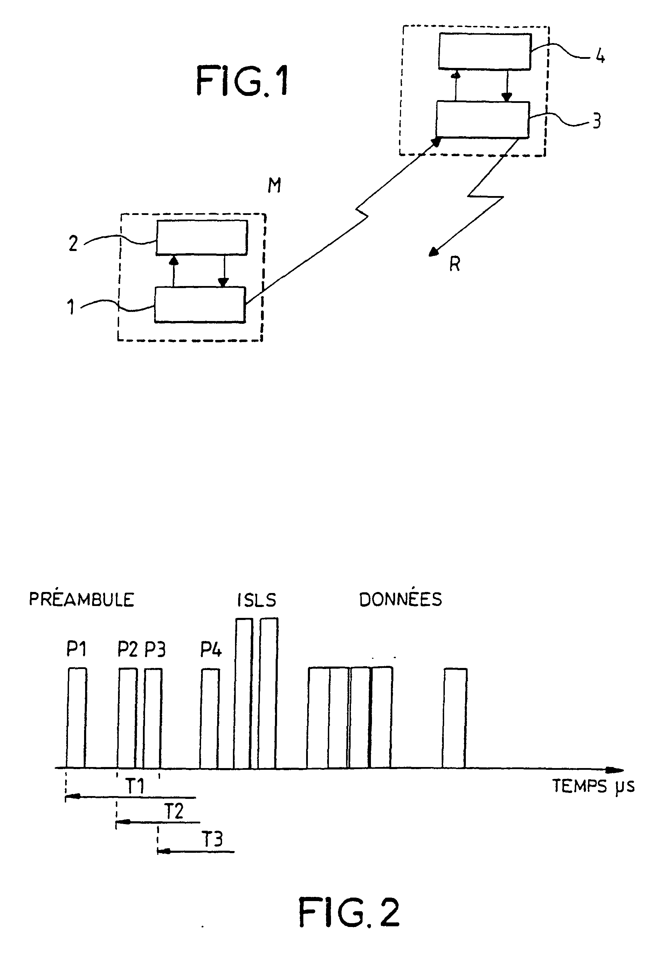

L'invention s'applique notamment dans les systèmes d'identification IFF employés dans le domaine de l'aviation militaire fonctionnant avec le Mode 5. Le mode 5 est un mode d'interrogation/réponse crypté utilisant une forme d'onde définie dans la partie V de l'accord de normalisation de l'OTAN, le STANAG 4193 et un algorithme de chiffrement propre. La figure 2 rappelle la structure de cette forme d'onde.

Dans la suite de la description, on désigne sous l'expression « canal », un mode d'interrogation/réponse crypté mis en oeuvre dans les systèmes d'identification IFF par question-réponse utilisant le Mode 5 mais avec des algorithmes de chiffrement différents.

Lorsque plusieurs algorithmes de chiffrement ou encore, pour un même algorithme de chiffrement, lorsque des clés de chiffrement différentes sont utilisées simultanément, il n'existe actuellement aucun moyen pour différencier les messages.

Un interrogateur choisit d'interroger avec un algorithme de chiffrement donné A ou avec des clés spécifiques (Algo A). Un répondeur ne sait pas avec quel algorithme ou quelle clé les messages qu'il reçoit sont chiffrés.

Divers cas peuvent alors se présenter :
- si le répondeur n'est équipé que de l'algorithme A, il déchiffrera le message d'interrogation et répondra.
- si le répondeur n'est équipé que de l'algorithme B (Algo B) différent de l'algorithme A, il ne pourra pas répondre aux interrogations mais son calculateur cryptographique sera utilisé pour tenter de déchiffrer le message avec l'algorithme A.
- Lorsque le répondeur est équipé des algorithmes A et B, il faudra qu'il traite les messages avec les deux algorithmes, soit en parallèle, soit en série, si les délais de traitements le permettent. Il répondra avec l'algorithme qui aura donné un message d'interrogation compréhensible et valide.

Le brevet français FR 2 632 421 concerne des systèmes d'identification du type IFF mode 4. L'invention consiste à modifier le préambule du message d'identification IFF mode 4 en effectuant une modulation par inversion de phase de certaines des impulsions du préambule de ce message.

L'idée de la présente invention consiste, notamment, à créer des canaux indépendants qui permettent d'avoir simultanément plusieurs types d'algorithmes de chiffrement ou plusieurs clés différentes pour un même algorithme de chiffrement et qui permettent au système de traiter les messages sans avoir recours à des traitements parallèles ou en série. Le système a la la possibilité de reconnaître les différents messages quelque soit l'algorithme de chiffrement ou les clés de chiffrement utilisés et de déterminer l'algorithme à utiliser pour décrypter les interrogations et les réponses.

Pour cela, les symboles de préambule du message d'interrogation sont modulés et le répondeur en détectant la modulation du préambule sait quel algorithme ou quelle clé ont été utilisés.

Les interrogations faites avec un algorithme A ne perturbent pas un répondeur qui n'est pas équipé de l'algorithme A. En fait les deux modes d'interrogation/réponse , algorithme A et algorithme B, mis en oeuvre dans le système interrogateur - répondeur s'ignorent et ne se perturbent pas. Ceci évite de fait des traitements additionnels et des occupations intempestives des calculateurs.

L'invention concerne un procédé d'interrogation/réponse dans un système de communication de type IFF (Mode 5) comportant un interrogateur et un répondeur, caractérisé en ce qu'il comporte :
- au niveau de l'interrogateur au moins une étape de modulation des impulsions d'un message d'interrogation en utilisant une fonction de modulation choisie parmi une famille de fonctions quasi-orthogonale,
- au niveau du répondeur, au moins une étape de détection de la fonction de modulation utilisée pour le préambule et de détermination de l'algorithme pour le décodage des informations contenues dans le message.

La fonction de modulation ou d'étalement est par exemple une fonction de Walsh à 16 bits.

La méthode est par exemple mise en oeuvre dans un système d'identification utilisant le Mode 5 avec différents algorithmes de chiffrement et/ou des clés différentes et le Mode 4.

L'invention concerne aussi un dispositif pour générer plusieurs canaux dans un système d'interrogation/réponse de type IFF comportant un interrogateur et un répondeur, caractérisé en ce qu'il comporte
- dans un interrogateur, un moyen adapté à moduler les impulsions du préambule d'un message d'interrogation Mode 5 à l'aide d'une fonction de modulation choisie parmi une famille de fonctions quasi-orthogonale
- dans un répondeur, un moyen adapté à déterminer la fonction de modulation des impulsions du préambule et l'algorithme pour décoder les informations contenues dans le message.

Le dispositif est par exemple adapté à générer une fonction de modulation de type fonction de Walsh.

La présente invention présente notamment les avantages suivants :
- Les canaux de transmission obtenus sont différents selon les algorithmes, ce qui permet au système de reconnaître
- automatiquement l'algorithme qu'il doit utiliser pour décrypter les interrogations et les réponses,
- Plusieurs systèmes peuvent ainsi fonctionner simultanément avec des algorithmes de chiffrement différents sans générer une occupation inutile des systèmes présents dans le voisinage,
- Les capacités de cryptage de chaque canal peuvent être accrues en faisant varier la fonction de modulation utilisée, par exemple la fonction de Walsh en fonction du temps,
- Un transpondeur donné peut recevoir simultanément sur plusieurs canaux sans nécessiter le traitement de tous les messages parallèlement ou séquentiellement sur chaque canal,
- Chaque canal étant indépendant, il est possible de définir des messages spécifiques pour un canal donné, ce qui augmente les capacités opérationnelles des systèmes,
- La séquence de Walsh présentant comme particularité d'être spécifique à un algorithme et associée aux évolutions éventuelles du préambule, l'invention offre une sécurité additionnelle au message,
- Le Mode d'interrogation/réponse Mode 4 mis en oeuvre dans les systèmes IFF actuels, utilise une forme d'onde avec un préambule de 4 impulsions sans étalement et correspond à un canal suivant l'invention.

D'autres caractéristiques et avantages de l'invention apparaîtront mieux à la lecture de la description qui suit donnée à titre illustratif et nullement limitatif en regard des figures annexées qui représentent :
- La figure 1 un exemple de structure d'échange de messages d'interrogation/réponse dans un système IFF,
- La figure 2 la structure d'un message d'interrogation du Mode 5 sans modulation,
- La figure 3 la structure d'un message d'interrogation du Mode 4,
- La figure 4 un exemple de structure du préambule du message en Mode 5 modulée par étalement.

La figure 1 rappelle le principe d'interrogation/réponse dans un système où l'interrogation se fait avec un mode crypté donné pour un répondeur du même mode crypté par exemple.

Un système IFF comportant un interrogateur 1 associé à un calculateur 2 de cryptographie, interroge un répondeur 3 en émettant un message d'interrogation M en Mode 5 dont le format est détaillé à la figure 2. Le répondeur 3 détermine dans quel Mode il est interrogé, par exemple, en Mode 4 ou en Mode 5, suivant un canal connu avec les bonnes clés ou non. Il transmet ensuite le message d'interrogation M au calculateur 4 de cryptographie auquel il est relié. Dans le cas d'une interrogation valide, il transmet un message de réponse R à l'interrogateur.

Un répondeur 3 est par exemple équipé d'une interface spécifique adaptée à répondre dans le mode d'interrogation uniquement.

Différents exemples d'architecture de systèmes IFF sont donnés par exemple dans le document intitulé « Secondary Surveillance Radar » de Michael C.Stevens, Editions Artech House, Boston, 1988.

La figure 2 schématise le format ou la structure du message d'interrogation du Mode 5. Il est composé d'un groupe de quatre impulsions P₁, P₂, P₃, P₄ suivi de deux impulsions optionnelles de commande ISLS de suppression des interrogations dans des lobes secondaires et d'un groupe D d'impulsions d'information composé d'impulsions modulées par étalement selon des lois chiffrées. Les impulsions du préambule sont espacées de façon telle que, T₁ correspond à la différence temporelle entre les deux impulsions extrêmes P₁ et P₄, T₂ la différence entre les impulsions P₄ et P₂ et T₃ entre les impulsions P₄ et P₃.

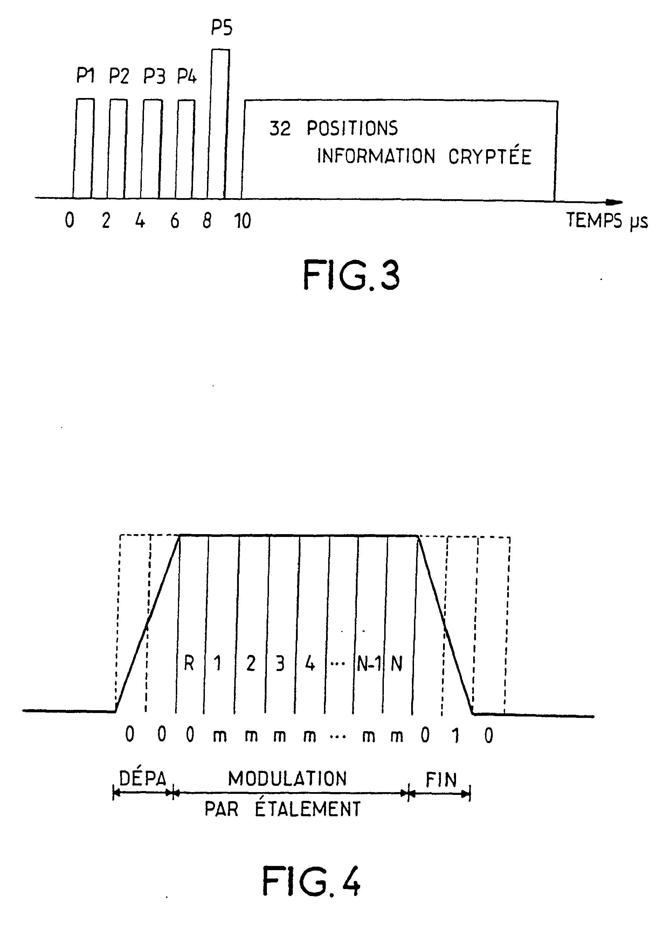

La figure 3 représente la structure du Mode 4. Ce message est composé d'un groupe de quatre impulsions P₁, P₂, P₃ et P₄, suivi d'une impulsion P₅ de commande de suppression des interrogations dans les lobes secondaires (ISLS) et d'un groupe d'impulsions d'information composé de 32 positions pouvant être ou non occupées par une impulsion. Toutes les impulsions et positions sont espacées de 2 µs et chaque impulsion dure 0.5 µs, par exemple. Le groupe d'information commence 10 vs après la première impulsion P₁. Dans ce groupe de 32 impulsions possibles, quand des positions d'impulsions contiguës sont libres on introduit à des positions correspondant à des multiples impairs de microseconde des impulsions anti interférence (All). La première de ces impulsions peut être à 9 µs de P1.

La figure 4 schématise les impulsions du préambule modulées par des fonctions orthogonales ou quasi-orthogonales ou encore des fonctions de Walsh connues de l'Homme du métier. Ces fonctions sont choisies de manière à créer des canaux de communication indépendants. La valeur de la séquence d'étalement est définie dans un but d'interopérabilité. Les séquences utilisées sont choisies afin d'être les plus orthogonales possibles entre les différents canaux.

Le procédé comporte par exemple les étapes suivantes :
- moduler les impulsions du préambule du message d'interrogation en utilisant des fonctions de Walsh ou des fonctions orthogonales ou quasi-orthogonales afin de différencier les différents canaux, et
- reconnaître la séquence d'étalement du préambule du message afin de déterminer, par exemple automatiquement, l'algorithme à mettre en oeuvre pour le décodage des informations contenues dans le message.

Pour cette deuxième étape, le dispositif selon l'invention comporte par exemple un processeur pourvu d'une fonction logicielle ou encore une série de corrélateurs disposés en parallèle ou en série.

La modulation des quatre impulsions du préambule du message d'interrogation par des fonctions de Walsh de 16 bits permet de générer des canaux distincts et d'utiliser sur chaque canal un algorithme de chiffrement différent, chaque canal utilisant une fonction différente.

Le procédé peut aussi comporter une étape de gestion et de génération dynamique des canaux en cours du fonctionnement du système d'interrogation-réponse. En fonction des besoins du système en interrogations-réponses, il est possible de faire varier et d'adapter les canaux. Le dispositif est alors équipé par exemple d'un processeur pourvu d'un logiciel.

Dans les systèmes concernés par l'invention, un interrogateur choisit par exemple d'interroger en Mode 4 ou en Mode 5 avec un canal donné. Le répondeur est adapté à fonctionner avec un ou deux modes et un ou plusieurs canaux simultanément.

Un exemple de mise en oeuvre de l'invention est donné ci-après.

### Du côté de l'interrogateur :

La modulation des impulsions du préambule du message est réalisée en fonction du canal choisi. Le Mode 4 est considéré comme un canal sans modulation.

### Du côté du répondeur :

Suivant l'état de l'art, la modulation des impulsions du préambule peut être déterminée de plusieurs façons, par échantillonnage du signal, par des corrélateurs disposés en série ou en parallèle. La modulation des impulsions du préambule détermine le canal de réception des interrogations ainsi que l'algorithme de déchiffrement à prendre en compte. Cette information est corroborée par l'information sur les caractéristiques de transmission du canal, espacement des impulsions de préambule (T₁, T₂, T₃ sur la figure 2) et étalement des données. Ces valeurs sont à un instant donné spécifiques au canal choisi.

## Revendications

1. Procédé d'interrogation/réponse dans un système de communication de type IFF Mode 5 comportant un interrogateur et un répondeur, **caractérisé en ce qu'**il comporte :
• au niveau de l'interrogateur une étape de modulation des impulsions du préambule d'un message d'interrogation en utilisant une fonction de modulation choisie parmi une famille de fonctions quasi-orthogonale en fonction du codage des informations contenues dans le message,
• au niveau d'un répondeur, au moins une étape de détection de la fonction de modulation utilisée pour le préambule et de détermination de l'algorithme pour le décodage des informations contenues dans le message.

2. Procédé selon la revendication 1 **caractérisé en ce que** l'on utilise comme fonction de modulation une séquence de Walsh à 16 bits.

3. Procédé selon l'une des revendications 1 et 2 **caractérisé en ce qu'**il comporte une étape de gestion dynamique des fonctions de modulation ou d'étalement et de programmation de plusieurs canaux de transmission des interrogations IFF Mode 5.

4. Application de la méthode selon l'une des revendications 1 à 3 dans un système d'identification utilisant le Mode 5 avec différents algorithmes de chiffrement et/ou des clés différentes et le Mode 4.

5. Dispositif permettant de générer plusieurs canaux dans un système d'interrogation/réponse de type IFF Mode 5 comprenant au moins un interrogateur et un répondeur **caractérisé en ce qu'**il comporte :
• dans un interrogateur, un moyen adapté à moduler les impulsions du préambule d'un message d'interrogation Mode 5 à l'aide d'une fonction de modulation choisie parmi une famille de fonctions quasi-orthogonales, en fonction du codage des informations contenues dans le message,
• dans un répondeur, un moyen adapté à déterminer la fonction de modulation des impulsions du préambule et l'algorithme pour décoder les informations contenues dans le message.

6. Dispositif selon la revendication 5 **caractérisé en ce qu'**il comporte un dispositif adapté à générer une fonction de modulation de type fonction de Walsh.

7. Dispositif selon l'une des revendications 5 et 6 **caractérisé en ce qu'**il comporte un ou plusieurs corrélateurs pour déterminer la fonction d'étalement utilisée, lesdits corrélateurs étant disposés en série et/ou en parallèle.

8. Dispositif selon l'une des revendications 5 et 6 **caractérisé en ce qu'**il comporte un processeur adapté à déterminer la fonction d'étalement.

9. Dispositif selon l'une des revendications 5 à 8 **caractérisé en ce qu'**il comporte un processeur équipé d'un logiciel pour gérer et générer plusieurs canaux choisi en fonction des besoins en interrogations/réponses.

10. Dispositif selon l'une des revendications 5 à 9 **caractérisé en ce que** le répondeur est équipé d'une interface spécifique choisie en fonction du mode d'interrogation.

## Claims

1. A process for interrogation/response in an IFF Mode 5 type communication system including an interrogator and a responder, **characterised in that** it comprises :
- with regard to the interrogator, a step of modulating the pulses from the preamble of an interrogation message by using a modulation function selected from a group of quasi-orthogonal functions, as a function of the coding of the information contained in the message,
- with regard to the responder, at least one step of detecting the modulation function used for the preamble and of determining the algorithm for decoding the information contained in the message.

2. The process according to claim 1, **characterised in that** a 16-bit Walsh sequence is used as the modulation function.

3. The process according to any one of claims 1 to 2, **characterised in that** it comprises a step of dynamic management of the modulation or spread functions and of programming several transmission channels for the IFF Mode 5 interrogations.

4. The application of the process according to any one of claims 1 to 3 to an identification system using Mode 5 with different ciphering algorithms and/or different keys and Mode 4.

5. A device for generating several channels in an IFF Mode 5 type interrogation/response system at least including an interrogator and a responder, **characterised in that** it includes:
- in an interrogator, a means adapted for modulating the pulses of the preamble of a Mode 5 interrogation message using a modulation function selected from a group of quasi-orthogonal functions, as a function of the coding of the information contained in the message,
- in a responder, a means adapted for determining the modulation function of the pulses of the preamble and the algorithm for decoding the information contained in the message.

6. The device according to claim 5, **characterised in that** it comprises a device designed for generating a Walsh function type modulation function.

7. The device according to any one of claims 5 to 6, **characterised in that** it comprises one ore more correlators for determining the spread function used, said correlators being disposed in series and/or in parallel.

8. The device according to any one of claims 5 to 6, **characterised in that** it comprises a processor designed for determining the spread function.

9. The device according to any one of claims 5 to 8, **characterised in that** it comprises a processor provided with software for managing and generating several channels selected as a function of the interrogation/response requirements.

10. The device according to any one of claims 5 to 9, **characterised in that** the responder is provided with a specific interface selected as a function of the interrogation mode.

## Patentansprüche

1. Abfrage/Antwort-Verfahren in einem Kommunikationssystem des Typs IFF Mode 5 mit einem Abfragesender und einem Antwortsender, **dadurch gekennzeichnet, dass** es Folgendes beinhaltet:
- in Bezug auf den Abfragesender, einen Schritt des Modulierens der Impulse von der Präambel einer Abfragenachricht mittels einer Modulationsfunktion, die ausgewählt ist aus einer Gruppe von quasi-orthogonalen Funktionen in Abhängigkeit von der Codierung der in der Nachricht enthaltenen Information,
- in Bezug auf den Antwortsender, wenigstens einen Schritt des Erkennens der für die Präambel benutzten Modulationsfunktion und des Ermittelns des Algorithmus zum Decodieren der in der Nachrichten enthaltenen Informationen.

2. Verfahren nach Anspruch 1, **dadurch gekennzeichnet, dass** eine 16-Bit-Walsh-Sequenz als Modulationsfunktion verwendet wird.

3. Verfahren nach Anspruch 1 oder 2, **dadurch gekennzeichnet, dass** es einen Schritt des dynamischen Verwaltens der Modulations- oder Streufunktionen und des Programmierens mehrerer Übertragungskanäle für die IFF Mode 5 Abfragen beinhaltet.

4. Anwendung des Verfahrens nach einem der Ansprüche 1 bis 3 auf ein mit Mode 5 arbeitendes Identifikationssystem mit unterschiedlichen Verschlüsselungsalgorithmen und/oder verschiedenen Schlüsseln und Mode 4.

5. Vorrichtung zum Erzeugen mehrerer Kanäle in einem Kommunikationssystem des Typs IFF Mode 5, das wenigstens einen Abfragesender und einen Antwortsender umfasst, **dadurch gekennzeichnet, dass** sie Folgendes umfasst:
- in einem Abfragesender ein Mittel zum Modulieren der Impulse der Präambel einer Mode 5 Abfragenachricht mittels einer Modulationsfunktion, die ausgewählt ist aus einer Gruppe von quasi-orthogonalen Funktionen in Abhängigkeit von der Codierung der in der Nachricht enthaltenen Informationen,
- in einem Antwortsender ein Mittel zum Ermitteln der Modulationsfunktion der Impulse der Präambel und des Algorithmus zum Decodieren der in der Nachricht enthaltenen Information.

6. Vorrichtung nach Anspruch 5, **dadurch gekennzeichnet, dass** sie eine Vorrichtung zum Erzeugen einer Modulationsfunktion des Walsh-Funktionstyps umfasst.

7. Vorrichtung nach Anspruch 5 oder 6, **dadurch gekennzeichnet, dass** sie einen oder mehrere Korrelatoren zum Ermitteln der verwendeten Streufunktion umfasst, wobei die Korrelatoren in Serie und/oder parallel geschaltet sind.

8. Vorrichtung nach Anspruch 5 oder 6, **dadurch gekennzeichnet, dass** sie einen Prozessor zum Ermitteln der Streufunktion umfasst.

9. Vorrichtung nach einem der Ansprüche 5 bis 8, **dadurch gekennzeichnet, dass** sie einen Prozessor mit Software zum Verwalten und Erzeugen mehrerer Kanäle umfasst, die in Abhängigkeit von den Abfrage/Antwort-Erfordernissen ausgewählt sind.

10. Vorrichtung nach einem der Ansprüche 5 bis 9, **dadurch gekennzeichnet, dass** der Antwortsender mit einer speziellen Schnittstelle ausgestattet ist, die in Abhängigkeit vom Abfragemodus ausgewählt ist.
